# FASCICULE DE BREVET EUROPEEN

(11) **EP 2 813 876 B1**
(45) Date de publication et mention de la délivrance du brevet: **24.08.2016**
(21) Numéro de dépôt: 14172456.7
(22) Date de dépôt: 13.06.2014
(51) Int. Cl.: G02B 7/00, G02B 7/14, G02B 21/24

(54) **Support destiné notamment à des systèmes tels des objectifs pour microscope et/ou des capteurs**
Halterung, insbesondere für Systeme wie Objektive für Mikroskope und/oder Sensoren
Mounting intended in particular for systems such as lenses for microscopes and/or sensors

(30) Priorité: 13.06.2013 FR 1355495
(43) Date de publication de la demande: 17.12.2014
(73) Titulaire: Sysmeca Ingenierie, 31770 Colomiers (FR)
(72) Inventeur: Lero, Christophe, 31490 Leguevin (FR)
(74) Mandataire: Cabinet Morelle & Bardou SC

(56) Documents cités:
- EP-A1- 1 901 102
- JP-A- 2006 153 943
- US-A1- 2006 045 327
- US-A1- 2010 073 793

## Description

La présente invention concerne un support destiné notamment à des systèmes tels des objectifs pour microscope et/ou des capteurs.

Il est connu par exemple d'équiper un microscope de plusieurs objectifs, chaque objectif présentant des caractéristiques particulières de grossissement, de luminosité ou autres. Les divers objectifs sont alors montés sur un porte-objectif qui se présente sous la forme d'une tête rotative. En faisant tourner le porte-objectif, il est possible de déplacer les objectifs pour les amener successivement face à des moyens d'observation tel par exemple un oculaire.

Cette solution largement répandue présente toutefois des inconvénients. Tout d'abord, le nombre d'objectifs est limité pour des raisons mécaniques et pour des raisons d'encombrement.

Un autre problème concerne un éventuel réglage à réaliser au niveau d'un objectif se trouvant sur un porte-objectif tournant. Lorsqu'un réglage mécanique par exemple est prévu, il concerne alors tous les objectifs du porte-objectif qui se déplacent d'un seul bloc. En outre, lorsqu'un accessoire, tel par exemple un filtre ou une lentille ou autre, est prévu en association avec un seul objectif, cet accessoire est monté entre les moyens d'observations (oculaire) et le porte-objectif, si bien que l'accessoire reste présent lorsqu'on change d'objectif, sauf bien entendu à le retirer par une manipulation particulière.

Ces problèmes existent également par exemple dans une machine de mesure et/ou de contrôle munie de capteurs adaptés à la mesure ou au contrôle réalisé (par exemple sur une puce électronique ou bien sur des cellules).

Le document US-2006/045327 divulgue un procédé et un dispositif permettant de positionner un objectif optique et un autre objectif par rapport à un point de vue et/ou une source d'énergie lumineuse. Le dispositif comprend une pluralité d'objectifs couplés à une plaque de support. Cette plaque de support peut se déplacer le long d'un axe de façon à positionner les objectifs. Cette plaque permet de projeter un faisceau laser sur un objet et/ou à un opérateur d'observer l'objet. Dans un mode de réalisation, le dispositif comprend une tour linéaire ou « tour optique » destinée au positionnement d'au moins un objectif par rapport à une source d'énergie lumineuse. Cette tour optique est couplée à un processeur et comprend : au moins un objectif ; une plaque de support ; un rail linéaire ; une échelle ; un capteur ; et un moteur linéaire.

Le document JP2009/186679 illustre un dispositif d'observation avec un système de détection optique comprenant un élément mobile de manière à pouvoir se déplacer dans une direction perpendiculaire à un axe optique, deux -ou plus- objectifs présentant des caractéristiques optiques proches étant fixés sur l'élément mobile.

Le document US-5,576,897 divulgue un dispositif optique à plusieurs lentilles destiné à un scanner optique. Les lentilles présentent des puissances d'agrandissement différentes. Ce document porte notamment sur un système de réduction utilisé entre un moteur et le support des diverses lentilles.

La présente invention a pour but de fournir un support destiné notamment à des systèmes tels des objectifs pour microscope et/ou des capteurs pouvant recevoir éventuellement un relativement grand nombre d'objectifs.

Avantageusement, le système proposé permettra un réglage indépendant de chaque système lorsqu'il est monté sur son support.

De préférence, le support selon l'invention pourra également être utilisé pour des applications (médical, micro-électronique, contrôle dimensionnel, ...) dans lesquelles il convient d'éviter tout risque de contamination.

À cet effet, la présente invention propose un support destiné notamment à des systèmes tels des objectifs pour microscope et/ou des capteurs, comportant :
- un bâti,
- une base montée coulissante selon une direction dite longitudinale par rapport à un bâti, et
- au moins deux systèmes montés alignés selon ladite direction longitudinale.

Selon la présente invention, au moins un système est monté sur la base par l'intermédiaire d'une platine orientable par rapport à la base.

Cette nouvelle configuration pour un support, tel par exemple un support d'objectifs pour microscope, repousse les limites quant au nombre d'objectifs, ou de systèmes de type capteur, source laser, ... pouvant être adaptés sur un microscope ou un outil de mesure, contrôle, .... De plus, pour une plus grande précision dans le positionnement des objectifs (ou similaires), il est prévu d'avoir un guidage linéaire et une parfaite adaptation des systèmes dans l'ensemble dans lequel ils sont intégrés est obtenue car au moins un système est monté sur la base de façon orientable par l'intermédiaire d'une platine.

Dans un support selon la présente invention, il est prévu que la platine présente une face d'appui et que la base présente un logement de telle sorte que lorsque la face d'appui repose dans le logement, il n'y ait qu'une seule ligne de contact. Bien sûr, selon la position relative de la platine par rapport à la base, la ligne d'appui peut être modifiée.

Une forme de réalisation permettant un réglage avec plusieurs degrés de liberté prévoit que la platine présente une face d'appui sphérique, et que la base présente un logement de forme conique de dimensions adaptées à celles de la face d'appui. On pourrait aussi prévoir d'avoir une surface sphérique au niveau du logement et une surface conique au niveau de la platine.

Le réglage de la position de la platine par rapport à la base est réalisé à l'aide de trois vis. Ce moyen de réglage est simple, économique et efficace. Les trois vis permettent un bon positionnement de la platine puisque trois points permettent de définir une surface. Pour que les vis ne gênent pas un changement d'orientation de la platine par rapport à la base, on prévoit que chaque vis présente une tête avec une face de contact, et que la platine présente un alésage de dimensions adaptées à chaque face de contact de telle sorte que la tête de la vis vienne au contact de l'alésage le long d'une ligne de contact. On prévoit par exemple au niveau de chaque tête de vis une surface de contact sphérique coopérant avec un alésage conique sur la platine correspondante.

Une forme de réalisation préférée prévoit qu'un élément déformable élastiquement (par exemple un joint torique ou un ressort) disposé au niveau de chaque vis entre la platine et la base. Cet élément déformable assure alors une contre réaction permettant de garantir un appui de la platine sur la vis.

Pour avoir une grande précision de guidage, on peut notamment prévoir qu'au moins une glissière à billes réalise un guidage entre la base et son bâti.

On peut envisager d'avoir une base présentant des positions indexées par rapport à son bâti mais dans une forme de réalisation préférée, le déplacement entre la base et son bâti est motorisé, pour pouvoir intégrer le support de systèmes dans un ensemble automatisé. Pour alors permettre d'assurer une bonne précision de positionnement des systèmes montés sur la base, le moteur utilisé est par exemple un moteur pas à pas. On peut aussi envisager d'utiliser un moteur linéaire qui permet également une excellente maîtrise des déplacements.

Dans le cas où les systèmes sont des objectifs de microscope montés sur la base alors les extrémités des objectifs opposées à la base sont de préférence dans un même plan. Il est ainsi possible de garder de mêmes réglages lorsqu'on passe d'un objectif à l'autre.

Enfin, la présente invention concerne également un microscope, caractérisé en ce qu'il comporte un support tel que décrit plus haut.

Des détails et avantages de la présente invention apparaitront mieux de la description qui suit, faite en référence au dessin schématique annexé sur lequel :
La figure 1 est une vue de côté d'un support d'objectifs selon la présente invention,
La figure 2 est une vue en perspective éclatée du support de la figure 1 sans ses objectifs,
La figure 3 est une vue similaire à la figure 2 mais sous un angle de vue différent,
La figure 4 est une vue de détails illustrant la motorisation du support illustré sur les figures précédentes,
La figure 5 est une vue de dessous à échelle agrandie d'une base et de platines mises en oeuvre dans le support illustré sur les figures précédentes, et
La figure 6 est une vue à échelle agrandie et en coupe selon la ligne de coupe VI-VI de la figure 5.

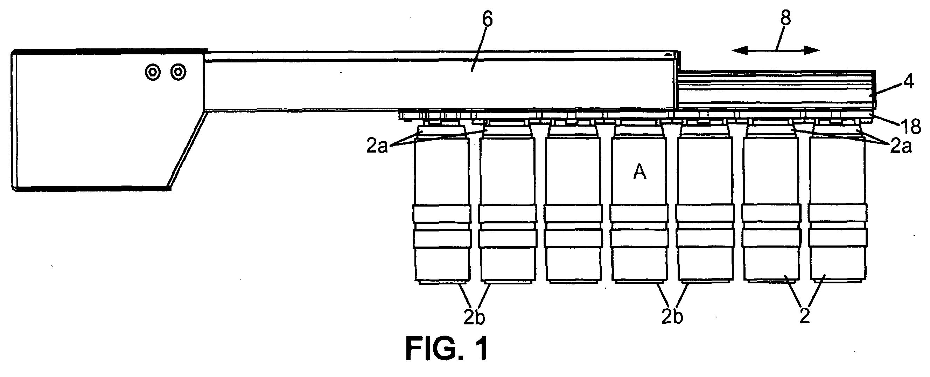

La figure 1 montre les divers éléments d'un support d'objectifs selon la présente invention. On reconnaît sur cette figure des objectifs 2 de microscope qui sont montés sur une base 4 pouvant coulisser par rapport à un bâti 6 selon une direction longitudinale 8 illustrée par une double flèche.

Les objectifs 2 sont des objectifs de type connu de l'homme du métier. Il s'agit d'objectifs destinés à être utilisés classiquement sur un microscope. Toutefois, l'un ou l'autre des objectifs 2, voire tous les objectifs, peuvent être remplacés par divers capteurs. Les domaines d'applications sont nombreux. À titre purement illustratif, on peut par exemple prévoir des objectifs tels ceux utilisés dans le domaine de la micro-électronique, ou bien du médical / bio-médical, ou bien des nanotechnologies, etc.. Le support tel qu'illustré sur la figure 1 peut alors venir s'interfacer sur une machine de mesure, un microscope, une source d'éclairage, une source laser, ...

Lorsque, comme illustré sur la figure 1, au moins deux objectifs sont montés sur la base 4, chaque objectif 2 présente une première extrémité 2a munie de moyens de montage et une seconde extrémité 2b opposée à l'extrémité 2a. Pour des objectifs 2 de microscope, on aura de préférence toutes les extrémités 2b dans un même plan. Ce plan est alors avantageusement parallèle à la direction longitudinale 8 ainsi qu'à un plan contenant des échantillons à observer.

Dans la suite de la description, on supposera que la direction longitudinale est horizontale, de même que le plan contenant les extrémités 2b des objectifs. On supposera en outre que le dispositif décrit est orienté de telle sorte que les extrémités 2a sont des extrémités supérieures ou bien, autrement dit, que les objectifs 2 se trouvent en dessous de la base 4 (orientation haut/bas).

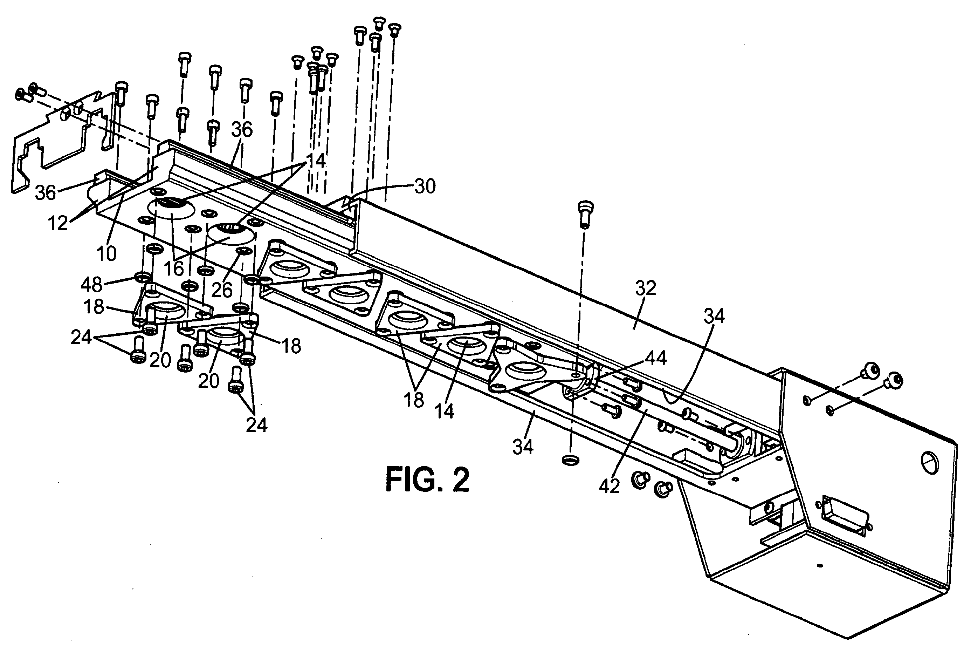

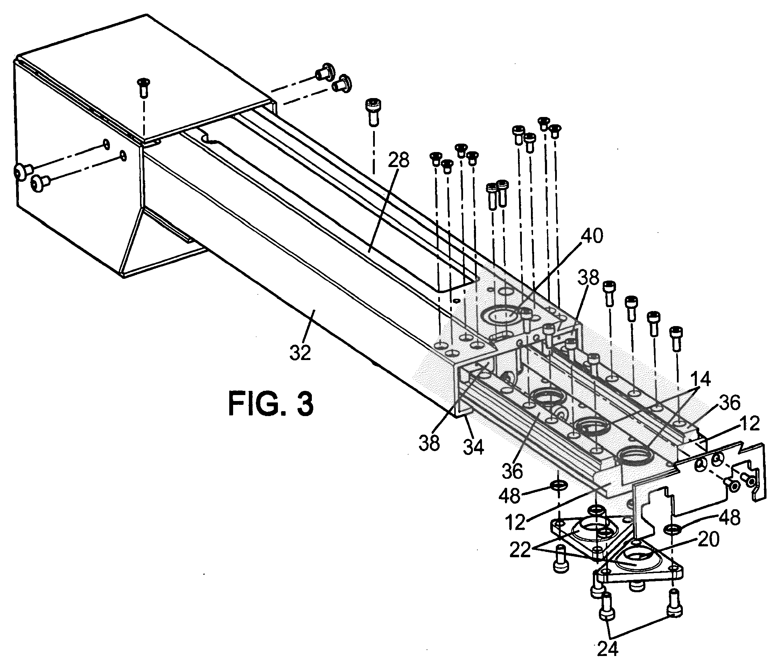

Les figures 2 et 3 permettent de mieux appréhender la forme de la base 4 et du bâti 6.

La base 4 présente une forme générale profilée comportant une section transversale en U, avec un fond 10 disposé dans un plan horizontal et deux branches latérales 12 s'étendant vers le haut à partie du fond 10. Cette base 4 peut être une pièce profilée obtenue par extrusion puis usinée ou peut être une pièce entièrement usinée à partir d'une barre.

Le fond 10 présente des alésages 14 qui correspondent chacun à un objectif 2. Chaque alésage 14 est traversant et son axe correspond sensiblement à l'axe optique de l'objectif 2 correspondant. Sur la figure 2, on remarque la présence sur la face inférieure du fond 10 d'un logement 16 autour de chaque alésage 14. Chaque logement 16 présente de préférence une forme conique.

Chaque objectif 2 est monté sur la base 4 par l'intermédiaire d'une platine 18. Dans la forme de réalisation illustrée sur les figures 2 et 3, chaque platine 18 présente la forme d'une plaque triangulaire présentant en son centre un alésage 20 dont le diamètre correspond de préférence au diamètre de l'alésage 14 correspondant. Autour de l'alésage 20, chaque platine 18 présente un jonc 22 annulaire (figure 3) dont la face périphérique extérieure est destinée à coopérer avec le logement 16 correspondant de la base 4. Cette face périphérique présente de préférence une forme sphérique de dimensions adaptées à celles du logement 16 correspondant.

L'homme du métier comprend de suite que grâce aux joncs 22 et aux logements 16, il est possible d'orienter chaque platine 18 par rapport à la base 4 selon trois directions. On peut ainsi changer l'orientation de l'alésage 20 de la platine 18 par rapport à l'orientation de l'alésage 14 de la base 4. Un objectif 2 étant solidaire de sa platine 18 correspondante, on peut ainsi changer l'orientation de l'objectif 2, et de son axe optique, par rapport à la base 4. Il n'est pas question de modifier cette orientation sur une large plage angulaire. Un réglage angulaire de l'ordre d'1° ou de quelques degrés est amplement suffisant pour la plupart des applications.

Chaque platine 18, de forme triangulaire, comporte à ses trois sommets des alésages qui sont utilisés pour leur fixation sur la base 4 à l'aide de trois vis 24. Des taraudages 26 correspondants sont prévus sous la base 4, autour des alésages 14 de celle-ci. Il est de la sorte possible de régler la position relative de chaque platine 18 sous la base 4 et de maintenir la position de réglage.

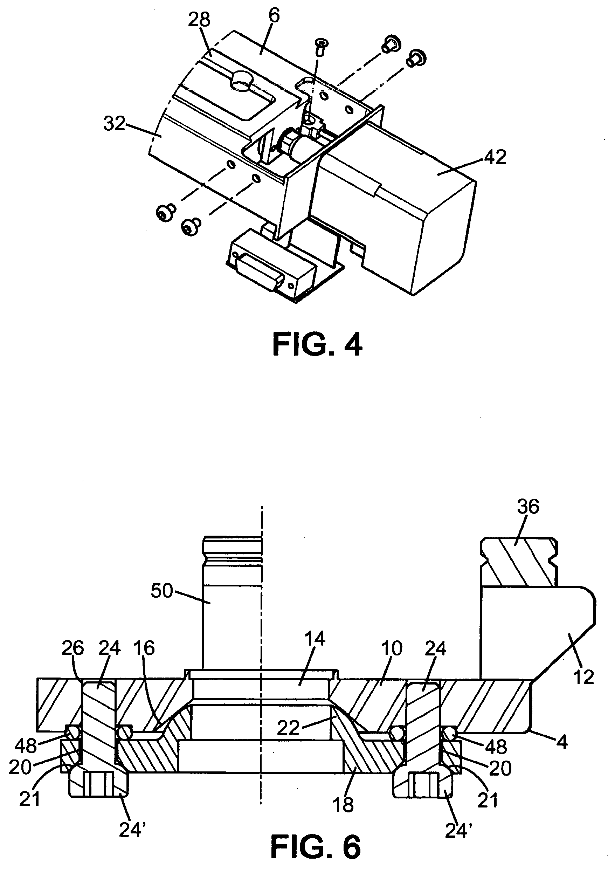

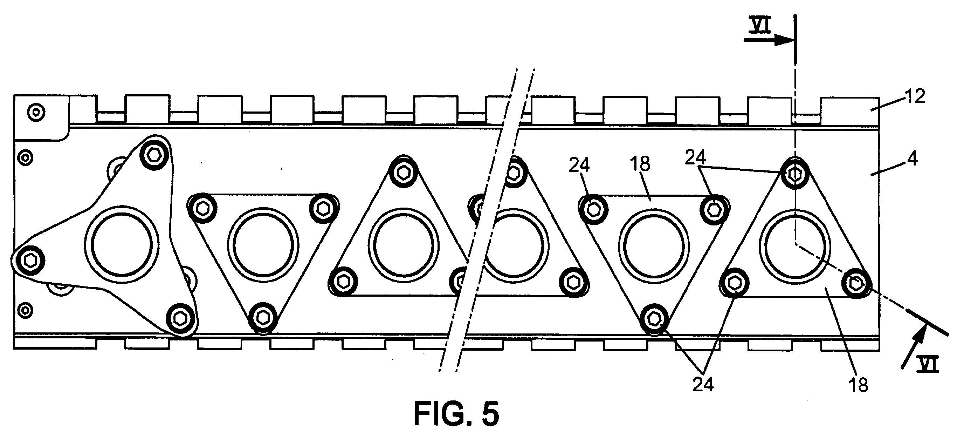

Les figures 5 et 6 illustrent plus en détail le montage original proposé ici d'un objectif 2 sur la base 4. Ce montage avantageux est particulièrement bien adapté à la présente invention mais pourrait également être utilisé avec d'autres supports d'objectifs.

La figure 5 montre à échelle agrandie en vue de dessous la base 4 sur laquelle sont montées des platines 18. Tout à gauche sur cette figure, on a illustré à titre d'exemple une forme alternative de platine 18. Cette platine, au lieu d'être triangulaire, présente une forme d'étoile à trois branches. À chaque extrémité de branche, se trouve un alésage similaire aux alésages 20 des platines 18 triangulaires pour recevoir une vis 24. On a de préférence uniquement trois vis pour le réglage de la position d'une platine par rapport à la base car trois points suffisent à définir un plan et donc aussi la normale à ce plan, qui correspond ici à l'axe optique de l'objectif destiné à venir prendre place sur la platine.

La base 4 illustrée sur les figures 5 et 6 diffère en outre de la base 4 des figures 1 à 4 en ce que ses branches latérales 12 sont ajourées.

La figure 6 illustre clairement comment le jonc 22 de la platine 18 représentée coopère avec le logement 16 conique. La coopération entre une surface sphérique (surface extérieure du jonc 22) et un logement conique permet d'avoir une seule ligne d'appui entre la platine 18 concernée et la base 4. Comme illustré sur les figures, il est également proposé de placer (en option) un élément élastique tel un joint torique 48 autour de chaque vis 24, entre la base 4 et la platine 18. Cet élément déformable assure alors une contre réaction permettant de garantir un appui de la platine 18 sur la vis 24.

Les trois vis 24 utilisées pour la fixation d'une platine 18 sur la base 4 présentent elles aussi de préférence une seule ligne de contact avec la platine 18. À cet effet, il est proposé ici que chaque vis 24 présente une tête 24' avec une face de contact sphérique venant coopérer avec un chanfrein conique 21 de l'alésage 20 correspondant.

La base 4 est montée coulissante dans le bâti 6. Ce dernier est une pièce qui a plusieurs fonctions. Elle fait le lien entre le microscope et les objectifs, c'est-à-dire qu'elle est, d'une part, montée sur le microscope et, d'autre part, reçoit la base 4 portant les objectifs 2. Cette pièce (bâti 6) est également utilisée pour la motorisation du déplacement de la base 4.

Le bâti 6 présente une forme allongée selon la direction longitudinale 8. Sur sa face supérieure, il présente des moyens de fixation à un corps de microscope (non représenté). Dans la forme de réalisation illustrée, ces moyens de fixation se présentent notamment sous la forme d'une queue d'aronde 28.

La face inférieure du bâti 6 présente une rainure longitudinale 30 présentant une section en C et destinée au logement et au guidage de la base 4. Cette rainure longitudinale 30 est ouverte sur la face inférieure du bâti 6. Elle présente un fond horizontal duquel s'étendent vers le bas deux bords latéraux 32 se terminant par deux rebords 34 orientés vers l'intérieur de la rainure longitudinale 30.

La base 4 vient prendre place dans la rainure longitudinale 30 avec son fond 10 orienté vers le bas, c'est-à-dire vers les rebords 34 qui retiennent la base 4 à l'intérieur de la rainure longitudinale 30. Le guidage de la base 4 est réalisé à l'aide de deux glissières à billes. Ces dernières comportent chacune un rail 36 fixé sur l'extrémité des branches latérales 12 de la base 4. Ces rails 36 sont guidés dans des paliers à billes 38 fixés dans le fond de la rainure longitudinale 30. La figure 3 montre les deux paliers à billes 38 utilisés pour le guidage des deux rails 36.

Le fond du bâti 6 présente un orifice 40 et il est prévu de venir placer un objectif 2 "actif" face à cet orifice 40 de telle sorte que la lumière traversant cet objectif 2 actif parvienne au microscope. Sur la figure 1, l'objectif 2 "actif" porte la référence A.

Un moteur 42 (figure 4) est utilisé pour commander le déplacement de la base 4 par rapport au bâti 6 et amener un objectif 2 face à l'orifice 40. Sur les figures 1 à 3, le moteur 42 est caché par un capot visible à l'extrémité du bâti 6. Ce moteur 42 entraine en rotation une vis à billes 44 qui traverse un écrou 46 solidaire de la base 4, la vis à billes 44 étant en prise avec l'écrou 46. Ce dernier est de préférence monté à l'extrémité de la base 4 se trouvant du côté du moteur 42.

Le moteur 42 est de préférence choisi de manière à pouvoir garantir un positionnement précis de la base 4 par rapport au bâti 6. Il peut alors s'agir par exemple d'un moteur pas à pas. Toutefois, on ne sortirait pas du cadre de la présente invention en modifiant la structure et en adoptant ici un moteur linéaire sans contact, solidaire de la base et entrainant une tige aimantée (cette variante ne nécessite donc plus la présence d'une vis à billes et le positionnement du moteur peut également différer par rapport aux figures). La course de la base 4 par rapport au bâti 6 est telle que tous les objectifs 2 puissent venir se positionner face à l'orifice 40. On peut par exemple prévoir que la base 4 est entièrement rentrée à l'intérieur de la rainure longitudinale 30 du bâti 6 lorsque l'objectif 2 disposé à l'extrémité de la base 4 opposée au moteur 42 est face à l'orifice 40 et est donc "actif"

La structure proposée permet de disposer un accessoire 50 entre l'orifice 40 et l'objectif 2 "actif". Comme illustré sur la figure 6, on peut envisager de monter sur le fond 10 de la base 4 un accessoire 50, qui peut être, à titre d'exemples non limitatifs, une lentille, un diaphragme ou un filtre (on peut bien entendu également prévoir de ne disposer aucun accessoire à ce niveau). L'alésage 14 de la base 4 est alors aménagé de manière à former un logement pour cet accessoire 50 du côté opposé au logement 16 conique.

Il est ainsi possible d'associer à chaque objectif 2 un accessoire 50 distinct. On pourrait ainsi par exemple avoir une base 4 sur laquelle seraient montés plusieurs objectifs 2 et à chaque objectif 2 serait associé un filtre de nature différente. Lorsqu'un objectif 2 devient alors "actif", son filtre associé vient prendre place entre l'objectif "actif" et l'orifice 40. Il est ainsi possible d'associer à chaque objectif un accessoire adapté alors que dans les supports de l'art antérieur, le plus souvent l'accessoire d'un porte-objectifs est commun pour tous les objectifs.

Comme il ressort de la description qui précède, le support d'objectifs décrit permet de recevoir un nombre relativement important d'objectifs. Dans la forme de réalisation représentée, sept objectifs sont prévus. Il apparaît clairement à l'homme du métier que ce nombre d'objectifs peut être différent, soit inférieur, soit supérieur.

Il convient de remarquer qu'un tel support pourrait également être utilisé pour recevoir des capteurs ou des systèmes pour réaliser par exemple des mesures et/ou contrôles sur des composants électroniques ou autres dispositifs nécessitant des contrôles de précision, des échantillons dans le domaine médical ou bio-médical, ...

La forme de réalisation décrite et illustrée présente aussi l'avantage d'avoir une structure qui présente des risques de contamination limités et qui permet donc d'envisager son utilisation dans une salle blanche (domaine de la micro-électronique, des nanotechnologies) ou pour des analyses médicales.

Un autre avantage du dispositif décrit est le système de fixation des objectifs sur leur base. Ce système, qui pourrait être utilisé sur d'autres supports, permet d'effectuer un réglage indépendant de chaque objectif, ou autre système. Il peut s'agir par exemple d'un réglage de parallaxe.

Bien entendu, la présente invention ne se limite pas à la forme de réalisation décrite ci-dessus à titre d'exemple illustratif non limitatif et aux variantes évoquées. Elle concerne également toutes les variantes de réalisation à la portée de l'homme du métier dans le cadre des revendications ci-après.

## Revendications

1. Support destiné notamment à des systèmes tels des objectifs (2) pour microscope et/ou des capteurs, comportant :
- un bâti (6),
- une base (4) montée coulissante selon une direction dite longitudinale (8) par rapport au bâti (6), et
- au moins deux systèmes montés alignés selon ladite direction longitudinale (8), au moins un système étant monté sur la base par l'intermédiaire d'une platine (18) orientable par rapport à la base (4),
**caractérisé en ce que** la platine (18) présente une face d'appui (22),
**en ce que** la base (4) présente un logement (16) de telle sorte que lorsque la face d'appui repose dans le logement (16), il n'y ait qu'une seule ligne de contact,
**en ce que** la position de la platine (18) par rapport à la base (4) est réglable à l'aide de trois vis (24) qui sont également utilisées pour la fixation de la platine (18) sur la base (4) au moyen de taraudages prévus dans celle-ci,
**en ce que** chaque vis présente une tête avec une face de contact, et **en ce que** la platine (18) présente un alésage de dimensions adaptées à chaque face de contact de telle sorte que la tête de la vis vienne au contact de l'alésage le long d'une ligne de contact respective.

2. Support selon la revendication 1, **caractérisé en ce que** la platine (18) présente une face d'appui (22) sphérique, et **en ce que** la base (4) présente un logement (16) conique de dimensions adaptées à la face d'appui (22).

3. Support selon l'une des revendications 1 ou 2, **caractérisé en ce que** chaque vis présente une tête avec une face de contact sphérique, et **en ce que** la platine (18) présente un alésage conique de dimensions adaptées à chaque face de contact.

4. Support selon l'une des revendications 1 à 3, **caractérisé en ce qu'**un élément (48) déformable élastiquement est disposé au niveau de chaque vis entre la platine (18) et la base (4).

5. Support selon l'une des revendications 1 à 4, **caractérisé en ce qu'**au moins une glissière à billes réalise un guidage entre la base (4) et son bâti (6).

6. Support selon l'une des revendications 1 à 5, **caractérisé en ce que** le déplacement entre la base (4) et son bâti (6) est motorisé.

7. Support selon l'une des revendications 1 à 6, **caractérisé en ce que** les systèmes sont des objectifs (2) de microscope montés sur la base (4) de telle sorte que les extrémités des objectifs (2) opposées à la base (4) sont dans un même plan.

8. Microscope, **caractérisé en ce qu'**il comporte un support selon l'une des revendications 1 à 7.

## Patentansprüche

1. Halterung, insbesondere für Systeme wie Objektive (2) für Mikroskope und/oder wie Sensoren, mit:
- einem Träger (6),
- einer Basis (4), die in einer als Längsrichtung (8) bezeichneten Richtung verschiebbar zum Träger (6) montiert ist, und
- mindestens zwei Systemen, die in der Längsrichtung (8) ausgerichtet montiert sind, wobei mindestens ein System auf der Basis mittels einer Platte (18) montiert ist, die zur Basis (4) ausrichtbar ist,
**dadurch gekennzeichnet,**
**dass** die Platte (18) eine Auflagefläche (22) aufweist,
**dass** die Basis (4) eine Aufnahme (16) dergestalt aufweist, dass wenn die Auflagefläche in der Aufnahme (16) ruht, es nur eine einzige Berührlinie gibt,
**dass** die Position der Platte (18) mit Bezug zur Basis (4) mithilfe von drei Schrauben (24) einstellbar ist, die auch für die Befestigung der Platte (18) auf der Basis (4) mittels in letzterer vorgesehenen Innengewinden verwendet werden, dass jede Schraube einen Kopf mit einer Berührfläche aufweist und
**dass** die Platte (18) eine Bohrung mit an jede Berührfläche angepassten Dimensionen aufweist, dergestalt, dass der Kopf der Schraube in Berührung mit der Bohrung entlang einer jeweiligen Berührlinie kommt.

2. Halterung nach Anspruch 1,
**dadurch gekennzeichnet,**
**dass** die Platte (18) eine sphärische Auflagefläche (22) aufweist und
**dass** die Basis (4) eine konische Aufnahme (16) aufweist, deren Dimensionen an die Auflagefläche (22) angepasst sind.

3. Halterung nach einem der Ansprüche 1 oder 2,
**dadurch gekennzeichnet,**
**dass** jede Schraube einen Kopf mit einer sphärischen Berührfläche aufweist und
**dass** die Platte (18) eine konische Bohrung aufweist, deren Dimensionen an jede Berührfläche angepasst sind.

4. Halterung nach einem der Ansprüche 1 bis 3,
**dadurch gekennzeichnet,**
**dass** ein elastisch verformbares Element (48) auf Höhe jeder Schraube zwischen der Platte (18) und der Basis (4) angeordnet ist.

5. Halterung nach einem der Ansprüche 1 bis 4,
**dadurch gekennzeichnet,**
**dass** mindestens eine Kugelführung eine Führung zwischen der Basis (4) und ihrem Träger (6) verwirklicht.

6. Halterung nach einem der Ansprüche 1 bis 5,
**dadurch gekennzeichnet,**
**dass** die Verschiebung zwischen der Basis (4) und ihrem Träger (6) motorisiert ist.

7. Halterung nach einem der Ansprüche 1 bis 6,
**dadurch gekennzeichnet,**
**dass** die Systeme Mikroskopobjektive (2) sind, die derart auf der Basis (4) montiert sind, dass die zur Basis (4) entgegengesetzten Enden der Objektive (2) in einer gleichen Ebene sind.

8. Mikroskop,
**dadurch gekennzeichnet,**
**dass** es eine Halterung nach einem der Ansprüche 1 bis 7 hat.

## Claims

1. A mounting, in particular, for use in systems such as lenses (2) for microscopes and/or sensors, comprising:
- a body (6)
- a base (4), mounted so as to slide in an essentially longitudinal direction (8) relative to the body (6), and
- at least two systems mounted aligned according to the said longitudinal direction (8), at least one system being mounted on the base by means of a plate (18) which can be oriented relative to the base (4),
**characterised in that** the plate (18) comprises a support face (22),
**in that** the base (4) comprises a compartment (16) in such a way that, when the support face is resting in the compartment (16), there is only one single line of contact,
**in that** the position of the plate (18) relative to the base (4) can be adjusted with the aid of three screws (24), which are likewise used for the fixing of the plate (18) on the base (4) by means of threading arrangements provided therein,
**in that** each screw comprises a head with a contact face, and
**in that** the plate (18) comprises a borehole of dimensions adapted to each contact face, in such a way that the head of the screw comes in contact with the borehole along a respective line of contact.

2. Mounting according to claim 1, **characterised in that** the plate (18) comprises a spherical support face (22), and **in that** the base (4) comprises a conical compartment (16), adapted to the support face (22).

3. Mounting according to any one of claims 1 or 2, **characterised in that** each screw comprises a head with a spherical contact face, and **in that** the plate (18) comprises a conical borehole of dimensions adapted to each contact face.

4. Mounting according to any one of claims 1 to 3, **characterised in that** an elastically deformable element (48) is arranged at the level of each screw between the plate (18) and the base (4).

5. Mounting according to any one of claims 1 to 4, **characterised in that** at least one ball bearing guideway provides a guide between the base (4) and the body (6).

6. Mounting according to any one of claims 1 to 5, **characterised in that** the displacement between the base (4) and the body (6) is motor-driven.

7. Mounting according to any one of claims 1 to 6, **characterised in that** the systems are microscope lenses (2) mounted on the base (4) in such a way that the ends of the lenses (2) opposite the base (4) are in the same plane.

8. Microscope, **characterised in that** it comprises a mounting according to any one of claims 1 to 7.
